Europäisches Patentamt

European Patent Office

Office européen des brevets

(19)

(11) Publication number: **0 287 718 B1**

# (12) EUROPEAN PATENT SPECIFICATION

(45) Date of publication of patent specification: **06.03.91**  (51) Int. Cl.⁵: **B01J 29/08**, C10G 47/16

(21) Application number: **87303455.7**

(22) Date of filing: **21.04.87**

(54) Middle distillate - producing hydrocracking catalyst.

(43) Date of publication of application:
**26.10.88 Bulletin 88/43**

(45) Publication of the grant of the patent:
**06.03.91 Bulletin 91/10**

(84) Designated Contracting States:
**BE DE ES FR GB IT NL SE**

(56) References cited:
**FR-A- 2 119 636**
**FR-A- 2 561 946**
**US-A- 3 597 349**
**US-A- 4 477 336**

(73) Proprietor: **UOP (a New York general partnership)**
**25 East Algonquin Road**
**Des Plaines Illinois 60017-5017(US)**

(72) Inventor: **Steigleder, Karl Z.**
**772 Weston Avenue**
**Glen Ellyn Illinois 60137(US)**

(74) Representative: **Brock, Peter William et al**
**URQUHART-DYKES & LORD 91 Wimpole Street**
**London W1M 8AH(GB)**

**Description**

This invention is applicable to the field of catalytic hydrocarbon conversion. The invention relates to a novel catalyst for use in a hydrocracking process. More specifically, it relates to an improved hydrocracking catalyst which demonstrates unexpected and exceptional activity, selectivity and resistance to deactivation when employed in a hydrocracking process producing middle distillates from heavy gas oils and the like under hydrocracking conditions.

Many refineries today produce middle distillate products such as jet fuel and diesel fuel by hydrocracking a heavy gas oil charge stock. The charge stock usually has a boiling point in the range between about 650-1050° F (343 TO 566° C). The hydrocracking products are obtained by contacting the heavy oil at an elevated temperature and pressure in the presence of hydrogen with a suitable hydrocracking catalyst. The middle distillate fraction which is uncovered has a boiling range between about 300-700° F (149 to 371° C). A main concern of refineries today is to increase middle distillate production via the hydrocracking process. By improving catalytic properties of the catalyst employed in the hydrocracking process, middle distillate production can be increased.

Activity, selectivity and stability are the three main catalytic properties by which a hydrocracking catalyst is evaluated. Activity usually is determined by comparing the temperature at which various catalysts must be utilized under otherwise constant hydrocracking conditions with the same feedstocks and same conversion rate of products boiling below a specified temperature. The lower the activity temperature for a given catalyst, the more active the catalyst is for the specified process. Selectivity of hydrocracking catalysts is a measure of the yield of a desired product. Stability is a measure of how well a catalyst maintains its activity and selectivity over an extended period of time when treating a given hydrocarbon feedstock. Stability is generally measured in terms of the rate of change in temperature required per day to maintain a given conversion rate.

The goal of hydrocracking catalysis is to provide a catalyst with the highest possible activity, selectivity and stability. Catalysts employed in hydrocracking processes usually comprise a Group VIII metal component (i.e. selected from the group and the platinum group metals) in combination with a Group IVA metal component (i.e. chromium, molybdenum and tungsten), both of which are in intimate admixture with a support material. The activity, selectivity and stability of the catalysts vary widely when different supports are used. Support materials known to the hydrocracking art comprise porous refractory inorganic oxide materials such as amorphous silica alumina, alumina and the like, as well as crystalline aluminosilicate zeolites, such as zeolite-Y. Support materials consisting essentially of refractory oxides generally have relative poor activity, but high selectivity, while support materials comprising zeolites generally provide high activity, but low selectivity.

The principal of the present invention, therefore, is to provide a hydrocracking catalyst having superior catalytic properties for hydrocracking hydrocarbons. More specifically, it is an object of this invention to provide a catalyst having superior activity, selectivity and stability for hydrocracking in comparison to prior art catalysts. Further, it is an object of this invention to provide a hydrocracking catalyst having superior catalytic properties for converting heavy gas oils to middle distillate products. Additionally, it is an object of this invention to provide a support or carrier material which may be useful in a hydrocracking process. It is also an object to provide a superior hydrocracking process for the conversion of heavy gas oils to middle distillate products. These and other objects and advantages of the present invention will become more apparent in view of the following description of the invention.

A number of patents disclose cracking catalysts comprising a mixture of zeolites dispersed in an inorganic oxide matrix.

US-A-3597349 discloses a hydrocracking catalyst comprising a mixture of a modified Y-type zeolite (Z-14 US), impregnated with a Group VI A (Mo) and a Group VIII metal (Co), and a cation (Ni) exchanged Y-type zeolite, the modified Y-type zeolite having a unit cell size of about 2.420 to 2.455 nm.

U.S. Patent No. 4,419,271 discloses a hydrocracking catalyst for use in the production of middle distillate oils comprising one or more hydrogenation components supported on a base containing a crystalline aluminosilicate zeolite and a dispersion of silica-alumina in an alumina matrix. Patentee teaches that a mixture of one or more crystalline aluminosilicates having cracking activity may be dispersed in the double matrix. Patentee, however, does not disclose any specific mixture of zeolites.

U.S. Patent No. 4,287,048 discloses a hydrocracking catalyst comprising an ultra-stable Y-type zeolite and a small pore crystalline zeolite such as mordenite in an inorganic oxide matrix.

U.S. Patent No. 4,137,152 discloses a cracking process utilizing a mixture of faujasite and mordenite.

U.S. Patent No. 3,894,934 discloses catalytic cracking of hydrocarbons utilizing a large pore zeolite and a small pore zeolite such as zeolite ZSM-5 dispersed in a common matrix.

U.S. Patent No. 3,702,886 discloses use of ZSM-5 zeolite alone or in combination with other materials such as zeolites or inert materials for catalytic cracking of hydrocarbons.

U.S. Patent No. 3,804,747 discloses a hydrocarbon conversion process utilizing a mixture of zeolites X and Y.

U.S. Patent No. 3,758,403 discloses a catalytic cracking composite comprising a large pore zeolite, such as zeolite Y, and a small pore zeolite, such as ZSM-5, in a siliceous matrix. The matrix may be active or inactive, such as silica-alumina or alumina. The use of the ZSM-5 zeolite results in obtaining a fuel of increased octane number.

U.S. Patent No. 3,769,202 discloses a combination catalyst comprising a mixture of two different zeolites, one having a pore size greater than 8 Angstroms 1 Angstrom = 0.1 nm and the other having a pore size of less than 7 Angstroms. The zeolites are mixed with an inorganic oxide matrix such as silica-alumina. The catalyst is suitable for cracking and hydrocracking of hydrocarbons.

U.S. Patent No. 3,925,195 discloses a cracking process utilizing a catalyst comprising a mixture of rare earth hydrogen Y-type zeolite, and hydrogen or transition metal-exchanged mordenite, calcium-exchanged type A zeolite, or hydrogen-exchanged erionite and an amorphous matrix.

U.S. Patent No. 3,764,520 discloses a catalyst comprising a mixture of two different zeolites, one having a pore size within the range of 6 to 15 Angstroms and the other having a pore size of less than 6 Angstroms in combination with an inorganic oxide support. The catalyst is useful for hydrocarbon conversion processes to give increased selectivity.

U.S. Patent No. 4,477,336 discloses a cracking catalyst composition comprising a mixture of a nondealuminated Y-zeolite having a unit cell size of 24.6 +/-0.1 Angstroms with a dealuminated Y-zeolite having a unit cell size less than 24.4 Angstroms.

In accordance with the invention, there is provided a catalyst composition comprising, in combination, at least a first Y-type crystalline aluminosilicate zeolite component and a second Y-type crystalline aluminosilicate zeolite component in intimate admixture with a refractory inorganic oxide matrix wherein said first and second zeolites have an average unit cell size within the range of 24.20 to 24.35 Angstroms and wherein the difference between the average unit cell size of said first and second zeolites is at least 0.1 Angstroms.

In another embodiment, the present invention provides for a hydrocracking catalyst composition comprising, in combination, a hydrogenation component, at least a first Y-type crystalline aluminosilicate component and a second Y-type crystalline aluminosilicate component in intimate admixture with a refractory inorganic oxide matrix wherein said first and secon zeolites have an average unit cell size within the range of 24.20 to 24.35 Angstroms and wherein the difference between the average unit cell size of said first and second zeolites is at least 0.1 Angstroms.

Furthermore, the invention provides for a catalytic hydrocracking process for the production of middle distillate oils boiling below 700° F (371° C) utilizing either of the above catalyst compositions.

The catalyst composition of the present invention will comprise at least two Y-type zeolite components in combination with an inorganic matrix.

The prior art has taught that zeolitic catalysts may be made from either natural or synthetic zeolites and may be used for hydrocarbon conversion. Known zeolites include the natural zeolites faujasite, mordenite, erionite and chabazite, and synthetic zeolites A, L, S, T, X and Y. In general, zeolites are metal aluminosilicates having a crystalline structure such that a relatively large adsorption area is present inside each crystal. Zeolites consist basically of three-dimensional frameworks of $SiO_4$ and $AlO_4$ tetrahedra with the tetrahedra cross-linked by the sharing of oxygen atoms. The electrovalence of the tetrahedra containing aluminum is balanced by the inclusion of cations in the crystal, for example, metal ions, ammonium ions, amine complexes or hydrogen ions. The spaces in the pores may be occupied by water or other adsorbate molecules. Normally, the crystalline zeolites occur, or are prepared in the alkali metal form which is generally inactive for catalytic hydrocarbon cracking.

The present invention contemplates zeolite components having cracking activity. To produce a zeolite having cracking activity, the alkali metals are usually replaced with multivalent metal-containing cations, hydrogen ions, or hydrogen ion precursors (e.g. ammonium ion). This replacement of cations is generally accomplished by ion exchange, a method well known in the art wherein the zeolite in the sodium or other alkali metal form is contacted with an aqueous solution containing hydrogen ions, ammonium ions, rare earth ions, or other suitable cations. Replacing even a portion of the sodium ions produces a zeolite having some cracking activity, but reducing the alkali metal content to less than 5 wt. %, preferably to less than 1 wt. %, and most preferably to less than about 0.5 wt. % (calculated as the alkali metal oxides), results in a material having substantial cracking activity.

The Y-type zeolite is generally disclosed in U.S. Patent No. 3,130,007. The crystals of zeolite Y are basically three-dimensional frameworks of $SiO_4$ and $AlO_4$ tetrahedrons cross-linked by the sharing of oxygen atoms. The electrovalence of each tetrahedron containing aluminum is balanced by the presence in the aluminosilicate framework of a cation such as an alkali metal ion. The void spaces in the framework are occupied by water molecules.

The chemical formula for zeolite Y expressed in terms of moles of oxides may be written as

$0.9 \pm 0.2 Na_2O:Al_2O_3:wSiO_2:xH_2O$

wherein w is a value greater than 3 up to about 6 and x may be a value up to about 9.

The Y-type zeolite components utilized in the present invention may be modified by any known technique. Preferred are Y-type zeolites which have been hydrothermally treated at temperatures above 500° C. Hydrothermal treatment is described in Dwyer, J., Zeolite Structure, Composition and Catalysis , Chemistry and Industry, Issue No. 7, April 2, 1984.

Regardless of the Y-type zeolite employed, the unit cell size of each of the zeolite components must be within the range of about 24.20 to 24.35 Angstroms. The composition will comprise a first and second zeolite component each having a unit cell size in the range of 24.20 to 24.35 Angstroms. The difference between the average unit cell size of the two zeolite components is at least 0.1 Angstroms. The weight ratio of the first to second zeolite component is 0.1 to 10:1 and preferably 1.0:1.0. The first zeolite component may be present in an amount of 1.0 to 20.0 wt. % and preferably 5.0 wt. %. The second zeolite component may be present in an amount of 1.0 to 20.0 wt. % and preferably 5.0 wt. %.

The catalyst composition also comprises a refractory inorganic oxide matrix. The composite comprises between 2 and 98 wt. % of the oxide matrix and preferably between 5 and 95 wt. %. The matrix may comprise any known refractory inorganic oxide such as alumina, magnesia, silica, titania, zirconia and the like and combinations thereof.

A preferred matrix comprises silica-alumina or alumina. The most preferred matrix comprises a mixture of silica-alumina and alumina wherein said silica-alumina comprises between 5 and 95 wt. % of said matrix and the overall silica content is between about 1 to 75 wt. % of said matrix.

The silica-alumina matrix is preferably a composite of alumina and silica. By way of specific examples, a satisfactory matrix material may comprise equimolar quantities of alumina and silica or 63% by weight of silica. In general, the matrix comprises from about 10 wt. % to about 90 wt. % alumina. The matrix may be formed by any of the numerous techniques which are rather well defined in the prior art relating thereto. Such techniques include the acid-treating of a natural clay, sand or earth, co-precipitation or successive precipitation from hydrosols. These techniques are frequently coupled with one or more activating treatments including hot oil aging, steaming, drying, oxidizing, reducing, calcining, etc. The pore structure of the matrix or carrier commonly defined in terms of surface area, pore diameter and pore volume, may be developed to specified limits by any suitable means including aging the hydrosol and/or hydrogel under controlled acidic or basic conditions at ambient or elevated temperature, or by gelling the carrier at a critical pH or by treating the carrier with various inorganic or organic reagents. A matrix, adaptable for utilization in the process of the present invention, will have a surface area of about 200 to 400 square meters per gram, a pore diameter of about 20 to about 300 Angstroms, a pore volume of about 0.10 to about 0.80 milliliters per gram, and apparent bulk density within the range of from about 0.50 to about 0.90 gram/cc.

The alumina matrix material may be any of the various hydrous aluminum oxides or alumina gels such as alpha-alumina monohydrate of the boehmite structure, alpha-alumina trihydrate of the gibbsite structure, beta-alumina trihydrate of the bayerite structure, and the like. A particularly preferred alumina is referred to as Ziegler alumina and has been characterized in U.S. Patents Nos. 3,852,190 and 4,012,313 as a by-product from a Ziegler higher alcohol synthesis reaction as described in Ziegler's U.S. Patent No. 2,892,858. A preferred alumina is presently available from the Conoco Chemical Division of Continental Oil Company under the trademark "Catapal". The material is an extremely high purity alpha-alumina monohydrate (boehmite) which, after calcination at a high temperature, has been shown to yield a high purity gamma-alumina.

It is understood that the precise physical and/or chemical characteristics of the catalyst of the present invention are not considered to be limiting upon the scope of the present invention. The catalyst may, for example, exist in the forms of pills, pellets, granules, broken fragments, spheres, or various special shapes, disposed as a fixed bed within a reaction zone, and the charge stock may be passed therethrough in the liquid, vapor or mixed phase, and in either upward or downward flow. Alternatively, the catalyst may be prepared in a suitable form for use in moving bed reaction zones in which the hydrocarbon charge stock and catalyst are passed either in countercurrent flow or in co-current flow, or in fluidized-solid processes in which the charge stock is passed upward through a turbulent bed of finely divided catalyst, or in the suspension process, in which the catalyst is slurried in the charge stock and the resulting mixture is conveyed into the reaction zone. The reaction products from any of the foregoing processes are separated from the catalyst, vented to atmospheric pressure, and fractionated to recover the various components thereof. The hydrogen and unconverted materials are recycled as desired.

The catalyst particles may be prepared by any known method in the art including the well-known oil drop and extrusion methods. In the case of the oil drop method, catalyst particles may be prepared by first suspending the selected zeolite powders in a suitable sol. Active metal components may also be incorporated into the sol. The sol admixture may then be passed as droplets into an oil bath which is maintained at an elevated temperature and retained in the oil bath until the sol droplets set to gelled spheres. The spherical particles may then be withdrawn from the oil bath and thereafter aged in a suspending medium at an elevated temperature for a suitable time period. The spherical particles may then be dried and calcined. If an alumina or silica-alumina oxide matrix is desired, the oil drop method may be carried out in accordance with U.S. Patent No. 2,620,314 or 3,003,972, respectively.

A second suitable and more preferred method of preparing the catalyst composition of the present invention is to co-mull the selected zeolites with alumina and amorphous silica-alumina. Prior to mixing, the admixed components are preferably crushed to a powder form. Active metal components may also be incorporated in the admixture. After mulling, the admixture is extruded through a die having suitable openings such as circular openings so as to produce an extrudate material of cylindrical shape. The extrudate can be cut in 1/2 to 1/4 inch lengths and then dried and calcined at elevated temperatures and conditions known in the art.

In addition to admixture before or during the oil drop or extrusion methods, hydrogenation components may be composited with the catalyst by impregnation after the selected zeolites and refractory inorganic oxide material have been formed, dried and calcined. Impregnation of the hydrogenation component may be carried out in any manner known in the art including evaporative, dip and vacuum impregnation techniques. In general, the dried and calcined particles are contacted with one or more solutions which contain the desired hydrogenation components in dissolved form. After a suitable contact time, the composite particles are dried and calcined to produce finished catalyst particles.

Hydrogenation components contemplated are those catalytically active components selected from Group VIA and Group VIII metals and their compounds. Generally, the amount of the catalytically active components present in the final catalyst is small compared to the quantity of the other above-mentioned components combined therewith. The Group VIII component generally comprises 0.1 to 20% by weight, preferably 1 to 15% by weight of the final catalytic composite calculated on an elemental basis. The Group VIA component comprises 0.05 to 15% by weight, preferably 0.5 to about 12% by weight of the final catalytic composite calculated on an elemental basis. The hydrogenation components contemplated contain metallic components from the group of molybdenum, tungsten, chromium, iron, cobalt, nickel, platinum, palladium, iridium, osmium, rhodium, rudinium and mixtures thereof.

When desired, a phosphorus component may also be incorporated into the catalyst. Phosphorus incorporation may be effected by either admixing the support materials with a phosphorus-containing compound prior to formation of the particles or including phosphoric acid in the impregnating solution. Usually phosphorus is present in the catalyst in the range of 1 to 50 wt. % and preferably 3 to 25 wt. % calculated as $P_2O_5$.

In addition, boron may also be present in the catalytic composite. Boron may be incorporated into the composite in any elemental or compound form and in any of the above manners described. That is, it may be incorporated during the particle formation or boron may be present as boric acid in the impregnating solution. Boron may also be incorporated into the framework of one or both of the selected zeolites. In the latter instance, a modification of the Y-type zeolite occurs and a silica-alumina-boron-zeolite is formed.

The hydrogenation components which, if present, will most likely be in their oxide forms after calcination in air may be converted to their sulfide forms if desired by contact at elevated temperatures with a reducing atmosphere comprising hydrogen sulfide. The catalyst may be sulfided in situ by contact with a sulfur containing feedstock or it may be sulfided prior to contact with any feedstock by immediately after calcination exposing the composite to a reduced atmosphere.

The foregoing described catalysts are especially useful for hydrocracking to convert a hydrocarbon feedstock to a more valuable product of lower average boiling point and lower average molecular weight. Most preferably, the above-described catalysts are especially useful for the production of middle distillate fractions boiling in the range of 300-700°F (149 to 371°C). In addition, the above catalysts are also useful for hydrogenation reactions such as hydrodenitrification and hydrodesulfurization of hydrocarbons. Typical feedstocks that may be treated include all mineral and synthetic oils and fractions thereof. Thus, such feedstocks such as straight run gas oils, vacuum gas oils, atmospheric residue, deasphalted vacuum residue, coker distillates and cat cracker distillates are contemplated. Preferred feedstocks include gas oils having approximately a 50% by weight or greater of their components boiling above 700°F (371°C).

Reaction conditions are those customarily employed in the art for hydrocracking processes. Reaction temperatures are in the range of 200 to 1500°F (93 to 816°C), preferably between 600 and 1200°F (316 to 649°C). Reaction pressures are in the range of atmospheric to about 3,000 psig (0 to 20685 kPa gage), preferably between 200 and 3000 psig (1379 and 20685 kPag gage). Contact times usually correspond to liquid hourly space velocities (LHSV) in the range of 0.1 hr$^{-1}$ to 15 hr$^{-1}$, preferably between 0.2 and 12 hr$^{-1}$. Hydrogen circulation rates are in the range of 1,000 to 50,000 standard cubic feed (scf) per barrel of charge (178 to 8900 m$^3$ H$_2$ per m$^3$ of charge), preferably between 2,000 and 30,000 scf per barrel of charge (356 to 5340 m$^3$/m$^3$).

The following examples which are provided for illustrative purposes and are not to be construed as limiting the scope of the invention, present catalysts which have been found to possess superior catalytic properties with respect to activity, selectivity and stability in the conversion of gas oils to middle distillate products by hydrocracking.

EXAMPLE 1

Modified Y-type zeolites were prepared by steaming a powdered zeolite with a unit cell size of about 24.56 Angstroms at a temperature of 1000 to 1500°F (538 to 816°C) for 0.5 to 24 hours at atmospheric pressure. The unit cell size of the modified zeolite can be controlled by varying the steaming conditions. Table I shows three modified Y-zeolites with different unit cell sizes which were prepared in the above manner and their respective steaming conditions.

### TABLE I

| Zeolite | Unit Cell Size(Angstrom) | Steaming Conditions Time (Hr) | Temp °C | Press. |
|---|---|---|---|---|
| A | 24.25 | 12 | 788 | Atmospheric |
| B | 24.30 | 2 | 788 | " |
| C | 24.35 | 2 | 732 | " |

EXAMPLE II

A catalyst composition was prepared by mixing a modified Y-zeolite from Example I, with a refractory oxide matrix admixture of silica-alumina and alumina in amounts selected to yield an extrudate containing 5 weight percent volatile free zeolite and 95 weight percent oxide matrix. The resulting mixture was extruded into approximately 1/16 inch x 1/2 inch cylinder lengths. The extruded material was dried and then air calcined at 650°C for 2 hours. The calcined particles were then evaporatively co-impregnated with an aqueous solution of ammonia metatungstate and nickel nitrate (Ni(NO$_3$)$_2$ . 6H$_2$O) present in amounts sufficient to produce a finished catalyst containing 1.0 wt. % elemental nickel and 10.0 wt. % elemental tungsten. The impregnated catalyst was then calcined for 45 minutes at 343°C and then for 90 minutes at 593°C. Three catalyst compositions were prepared in the above manner, each containing one of the three modified Y-zeolites prepared in Example I. Catalysts No. 1, 2 and 3 were prepared using a support containing 5 wt. % of zeolites A, B and C of Examples I and 95 wt. % oxide matrix, respectively. Catalyst No. 4 was prepared using a support containing 10 wt. % of zeolite B of Example I and 90 wt. % oxide matrix. The pertinent properties of Catalysts No. 1-4 and of their associated supports are listed in Table II

## TABLE II

| Catalyst No. | 1 | 2 | 3 | 4 | 5 |
|---|---|---|---|---|---|
| **Support Composition Wt.%** | | | | | |
| Zeolite | 5 | 5 | 5 | 10 | 10 |
| Oxide Matrix | 95 | 95 | 95 | 90 | 90 |
| **Catalyst Composition Wt. %** | | | | | |
| Ni | 1.0 | 1.0 | 1.0 | 1.0 | 1.0 |
| W | 10.0 | 10.0 | 10.0 | 10.0 | 10.0 |
| **Zeolite Characteristics** | | | | | |
| Zeolite (from Example I) | A | B | C | B | A,C |
| Unit Cell Size, $\mathring{A}$ (Angstrom) | 24.25 | 24.30 | 24.35 | 24.30 | 24.30 (Average) |

### EXAMPLE III

A catalyst composition of the present invention was prepared by first mixing equal weight portions of Zeolite A and Zeolite C from Example I. The zeolite admixture was then mixed with a refractory oxide admixture identical to that of Catalyst No. 4 in amounts selected to yield an extrudate support containing 10 wt. % total zeolite and 90 wt. % oxide matrix. The resulting mixture was then extruded, calcined and impregnated in exactly the same manner as described in Example II. The pertinent properties of this catalyst No. 5 and of its associated support are also given in Table II. It is important to note that, since equal portions of Zeolite A (24.25 Angstroms unit cell) and Zeolite C (24.35 Angstroms unit cell) were mixed together, the average unit cell size of the zeolite admixture was 24.30 Angstroms.

### EXAMPLE IV

Each of the foregoing catalysts were tested for activity and selectivity to middle distillate according to the following method:

A preheated vacuum gas oil having the chemical and physical properties shown in Table III was passed on a once-through basis through an isothermal reactor containing 75 cc of catalyst particles mixed with about 29 cc of 60 to 80 mesh (250 to 177 microns) quartz. The operating parameters were 2000 psig (13790 kPa gage), 1.0 LHSV, a hydrogen recycle flow of 10,000 scf/bbl (1780 $m^3/m^3$) with 90-95% purity and a run length of approximately 4 days. The reactor temperature was adjusted to provide 70 wt. % conversion to products boiling at 700° F (371° C) or less. The conversion percent is calculated from a liquid chromatograph boiling range analysis of the product.

## TABLE III

### Vacuum Gas Oil Properties

| Specific Gravity @ 60°F (16°C) | 0.9248 | | Distillation, °C | |
|---|---|---|---|---|
| Gravity °API @ 60°F (16°C) | 21.5 (924 kg/m³) | IPB | 280 | |
| Pour Point, °F | 80 (27°C) | 5/10% | 340/372 | |
| Analine Point, °F | 167.0 (75°C) | 20/30 | 398/419 | |
| Sulfur (LECO), wt. % | 2.24 | 40/50 | 439/455 | |
| Nitrogen (Kjeldahl), ppm | 1100 | 60/70 | 473/490 | |
| Carbon, wt. % | 85.82 | 80/90 | 514/544 | |
| Hydrogen, wt. % | 11.64 | EP | 582 | |
| Bromine No. | 5.0 | % Rec. | 99.0 | |
| Viscosity, @ 210°F (99°C) | 6.954 | | | |
| Conradson Carbon, wt. % | 0.42 | | | |

The results of the above test are compiled in Table IV. The data indicates that Catalyst No. 5 (24.30 A average cell size, 10 wt. % zeolite) has yield performance identical to Catalyst No. 2 (24.30 A cell size, 5 wt. % zeolite), but unexpectedly is 12°F (6.6°C) more active. In comparison to Catalyst No. 4 (24.30 A cell size, 10 wt. % zeolite), Catalyst No. 5 is unexpectedly 6°F (3.3°C) more active and gives a 1.9 wt. % increase in selectivity for the desired middle distillate of 300 to 700°F (149 to 371°C) product.

### TABLE IV

| Catalyst No. | 1 | 2 | 3 | 4 | 5 |
|---|---|---|---|---|---|
| Activity, °F (°C) | 794 (423.3) | 782 (416.6) | 774.5 (412.5) | 776 (413.3) | 770 (410) |
| 300-700°F (149-371°C) Yield, Wt. % | 62.4 | 60.9 | 56.9 | 59.0 | 60.9 |
| Unit Cell Size (Angstrom) | 24.25 | 24.30 | 24.35 | 24.30 | 24.30 (Average) |
| Conversion, wt. % | 70 | 70 | 70 | 70 | 70 |
| Wt. % Zeolite | 5 | 5 | 5 | 10 | 10 |

## Claims

1. A hydrocracking catalyst comprising a combination of a catalytically effective amount of a hydrogenation component with a support comprising a mixture of first and second zeolites in intimate admixture with a refractory inorganic oxide matrix, the mixture of zeolites comprising first and second modified Y zeolites, characterised in that each of said first and second modified Y zeolites has a unit cell size within the range of 2.420 to 2.435 nm (24.20 to 24.35 Angstroms), and in that the unit cell sizes of said first and second modified Y zeolites are different, the difference between the unit cell sizes being at least 0.01 nm ( 0.1 Angstroms).

2. A catalyst according to Claim 1 or 2 characterised in that said first modified Y zeolite has an average unit cell size of 2.425nm (24.25 Angstroms), and said second modified zeolite has an average unit cell size of 2.435 nm (24.35 Angstroms).

3. A catalyst according to Claim 1 characterized in that the weight ratio of said first modified Y zeolite to said second modified Y zeolite is in the range of 0.1:1 to 10:1.

4. A catalyst according to any preceding claim characterized in that said first and second modified Y zeolites are each present in an amount of 1.0 to 20.0 wt. %.

5. A catalyst according to any of the preceding claims characterized in that the hydrogenation component comprises 0.1 to 20% by weight of a Group VIII metal or compound.

6. A catalyst according to claim 5 characterized in that the hydrogenation component comprises 0.05 to 15% by weight of a Group VI A metal or compound.

7. A catalyst according to any of the preceding claims characterized in that it contains 1 to 50 wt. % of phosphorus, calculated as $P_2O_5$.

8. A hydrocracking process comprising contacting a high boiling hydrocarbon feedstock with a catalyst at hydrocracking conditions selected to selectively produce a middle distillate product boiling in the range of 149 to 371° C, characterized in that the catalyst is a catalyst according to any of the preceding claims.

9. A process according to claim 8 characterized in that said hydrocracking conditions comprise a temperature in the range of 93 to 815° C, a pressure in the range of atmospheric to 20685 kPa gauge and a liquid hourly space velocity in the range of 0.1 to 15 hr$^{-1}$.

## Revendications

1. Catalyseur d'hydrocraquage comprenant une association d'une quantité catalytiquement efficace d'un composant d'hydrogénation avec un support comprenant un mélange d'une première et d'une seconde zéolites en mélange intime avec une matrice d'oxyde minéral réfractaire, ledit mélange de zéolites comprenant une première et une seconde zéolites Y modifiées, caractérisé en ce que chacune desdites première et seconde zéolites Y modifiées a une taille de cellule élémentaire comprise dans l'intervalle de 2,420 à 2,435 nm (24,20 à 24,35 angströms) et en ce que les tailles de cellules élémentaires desdites première et seconde zéolites modifiées sont différentes, la différence entre les tailles de cellules élémentaires étant d'au moins 0,01 nm (0,1 angström).

2. Catalyseur selon la revendication 1 ou 2, caractérisé en ce que ladite première zéolite Y modifiée a une taille moyenne de cellule élémentaire de 2,425 nm (24,25 angströms) et ladite seconde zéolite Y modifiée a une taille moyenne de cellule élémentaire de 2,435 nm (24,35 angströms).

3. Catalyseur selon la revendication 1, caractérisé en ce que le rapport en poids de ladite première zéolite Y modifiée à ladite seconde zéolite Y modifiée s'inscrit dans l'intervalle de 0,1:1 à 10:1.

4. Catalyseur selon l'une quelconque des revendications précédentes, caractérisé en ce que lesdites première et seconde zéolites Y modifiées sont chacune présentes en une quantité de 1,0 à 20,0 % en poids.

5. Catalyseur selon l'une quelconque des revendications précédentes, caractérisé en ce que le composant d'hydrogénation comprend 0,1 à 20 % en poids d'un métal ou composé de métal du Groupe VIII.

6. Catalyseur selon la revendication 5, caractérisé en ce que le composant d'hydrogénation comprend 0,05 à 15 % en poids d'un métal ou composé de métal du Groupe VI A.

7. Catalyseur selon l'une quelconque des revendications précédentes, caractérisé en ce qu'il contient 1 à 50 % en poids de phosphore, calculé en $P_2O_5$.

8. Procédé d'hydrocraquage consistant à mettre une charge d'alimentation d'hydrocarbure à haut point d'ébullition en contact avec un catalyseur dans des conditions d'hydrocraquage choisies pour produire sélectivement un distillat moyen bouillant dans l'intervalle de 149 à 371 °C, caractérisé en ce que le catalyseur est un catalyseur selon l'une quelconque des revendications précédentes.

9. Procédé selon la revendication 8, caractérisé en ce que lesdites conditions d'hydrocraquage comprennent une température située dans l'intervalle de 93 à 815 °C, une pression située dans l'intervalle allant de la pression atmosphérique à 20 685 kPa au manomètre et une vitesse spatiale horaire liquide située dans l'intervalle de 0,1 à 15 $h^{-1}$.


**Ansprüche**

1. Hydrokrackkatalysator mit einer Kombination einer katalytisch wirksamen Menge einer Hydrierkomponente mit einem Träger, der ein Gemisch erster und zweiter Zeolithe in innigem Gemisch mit einer hitzebeständigen anorganischen Oxidmatrix umfaßt, wobei das Zeolithgemisch erste und zweite modifizierte Zeolithe Y umfaßt, **dadurch gekennzeichnet**, daß jeder der ersten und zweiten modifizierten Zeolithe Y eine Einheitszellengröße im Bereich von 2,420 bis 2,435 nm (24,20 bis 24,35 Å) hat und daß die Einheitszellengrößen dieser ersten und zweiten modifzierten Zeolithe Y unterschiedlich sind, wobei der Unterschied zwischen den Einheitszellengrößen wenigstens 0,01 nm (0,1 Å) beträgt.

2. Katalysator nach Anspruch 1 oder 2, **dadurch gekennzeichnet**, daß der erste modifizierte Zeolith Y eine mittlere Einheitszellengröße von 2,425 nm (24,25 Å) und der zweite modifizierte Zeolith Y eine mittlere Einheitszellengröße von 2,435 nm (24,35 Å) hat.

3. Katalysator nach Anspruch 1, **dadurch gekennzeichnet**, daß das Gewichtsverhältnis des ersten modifizierten Zeoliths Y zu dem zweiten modifizierten Zeolith Y im Bereich von 0,1 : 1 bis 10 : 1 liegt.

4. Katalysator nach einem der vorausgehenden Ansprüche, **dadurch gekennzeichnet**, daß die ersten und zweiten modifizierten Zeolithe Y jeweils in einer Menge von 1,0 bis 20,0 Gew.-% vorliegen.

5. Katalysator nach einem der vorausgehenden Ansprüche, **dadurch gekennzeichnet**, daß die Hydrierkomponente 0,1 bis 20 Gew.-% % eines Metalles oder einer Verbindung der Gruppe VIII umfaßt.

6. Katalysator nach Anspruch 5, **dadurch gekennzeichnet**, daß die Hydrierkomponente 0,05 bis 15 Gew.-% eines Metalles oder einer Verbindung der Gruppe VIA umfaßt.

7. Katalysator nach einem der vorausgehenden Ansprüche, **dadurch gekennzeichnet,** daß er 1 bis 50 Gew.-% Phosphor, berechnet als $P_2O_5$, enthält.

8. Hydrokrackverfahren unter Behandlung einer hochsiedenden Kohlenwasserstoffbeschickung mit einem Katalysator bei Hydrokrackbedingungen, die so ausgewählt sind, daß sie selektiv ein im Bereich von 149 bis 371 °C siedendes Mitteldestillatprodukt erzeugen, **dadurch gekennzeichnet**, daß der Katalysator ein Katalysator nach einem der vorausgehenden Ansprüche ist.

9. Verfahren nach Anspruch 8, **dadurch gekennzeichnet**, daß die Hydrokrackbedingungen eine Temperatur im Bereich von 93 bis 815 °C, einen Druck im Bereich von Atmosphärendruck bis 20 685 kPa Überdruck und eine stündliche Flüssigkeitsraumgeschwindigkeit im Bereich von 0,1 bis 15 $h^{-1}$ umfassen.